# EUROPEAN PATENT APPLICATION

(11) **EP 4 664 108 A1**
(43) Date of publication of application: **17.12.2025**
(21) Application number: 23921340.8
(22) Date of filing: 11.12.2023
(51) Int. Cl.: G01N 35/02

(54) **CONTAINER STORAGE DEVICE, CONTAINER STORAGE METHOD, AND AUTOMATIC ANALYSIS SYSTEM**

(30) Priority: 10.02.2023 JP 2023019130
(71) Applicant: HITACHI HIGH-TECH CORPORATION, Tokyo 105-6409 (JP)
(72) Inventor: SHINOHARA Kodai, Tokyo 105-6409 (JP); MATSUDA Yuki, Tokyo 105-6409 (JP); KOHARA Yasuhiro, Tokyo 105-6409 (JP); SASAKI Shunsuke, Tokyo 105-6409 (JP); CHIDA Saori, Tokyo 105-6409 (JP)
(74) Representative: MERH-IP Matias Erny Reichl Hoffmann Patentanwälte PartG mbB
(86) International application number: PCT/JP2023/044280
(87) International publication number: WO 2024/166520

(57) **Abstract**

There is provided a container storage apparatus that equalizes frequencies of use of a plurality of container storage cases, slows progression of wear of components, and reduces maintenance possibilities. The container storage apparatus includes a case 203 capable of holding and storing a container 201 therein, a storage 9c capable of holding a plurality of cases 203, and a control unit 12 that controls the storage 9c. The control unit 12 includes a number counting unit 121 that acquires, for each of the plurality of cases 203, a first value calculated based on the number of times the container 201 is inserted into the case 203 or the number of times the container 201 is taken out from the case 203, and a determination unit 123 that determines, based on the first value, the case 203 into which the container 201 conveyed from the outside is to be inserted next.

## Description

### Technical Field

The present invention relates to a container storage apparatus, a container storage method, and an automatic analysis system.

### Background Art

A mechanism for storing a calibration and quality control material to be cooled is known (see PTL 1). Specifically, a cooling storage assembly is a plurality of detachable evaporation covers configured to be placed on the cooling base assembly without coming into contact with a plurality of fluid tubes and configured to be moved by a sample handling robot arm.

### Citation List

### Patent Literature

PTL 1: JP2019-525116A

### Summary of Invention

### Technical Problem

In the cooling storage assembly, in order to store a large number of sample containers, a large number of sample container storage positions capable of accommodating the sample containers are arranged. When there are a large number of storage positions, there is a possibility that the plurality of sample containers are stored in a biased manner to predetermined positions. In this case, a frequency of maintenance increases due to progression of wear of components at some positions, which imposes a burden on a user and a service person.

PTL 1 does not describe the progression of the wear of the components due to the storage biased to some positions.

Therefore, an object of the invention is to provide a container storage apparatus, a container storage method, and an automatic analysis system that equalize a use frequency of a plurality of container storage positions, slow progression of wear of components, and reduce a maintenance frequency.

The automatic analysis system is a system including the container storage apparatus and the automatic analyzer.

### Solution to Problem

In order to achieve the above object, the invention is formed as follows.

A container storage apparatus includes: cases each configured to hold and store a container therein; a storage configured to hold the plurality of cases; and a control unit configured to control the storage. The control unit includes: a number counting unit configured to acquire, for each of the plurality of cases, a first value calculated based on the number of times the container is inserted into the case or the number of times the container is taken out from the case; and a determination unit configured to determine, based on the first value, the case into which the container conveyed from the outside is to be inserted next.

A container storage method includes: acquiring, for each of a plurality of cases held in a storage and each configured to hold and store a container therein, a first value based on the number of times the container is inserted into the case or the number of times the container is taken out from the case; and determining, based on the first value, the case into which the container conveyed from the outside is to be inserted next.

An automatic analysis system includes: the container storage apparatus; and an automatic analyzer. The automatic analyzer includes: a sample container loading and discharging unit; a sample container conveyance line; and an analysis unit.

### Advantageous Effects of Invention

According to the invention, it is possible to provide a container storage apparatus, a container storage method, and an automatic analysis system that equalize a use frequency of a plurality of container storage cases, slow progression of wear of components, and reduce maintenance opportunities.

### Brief Description of Drawings

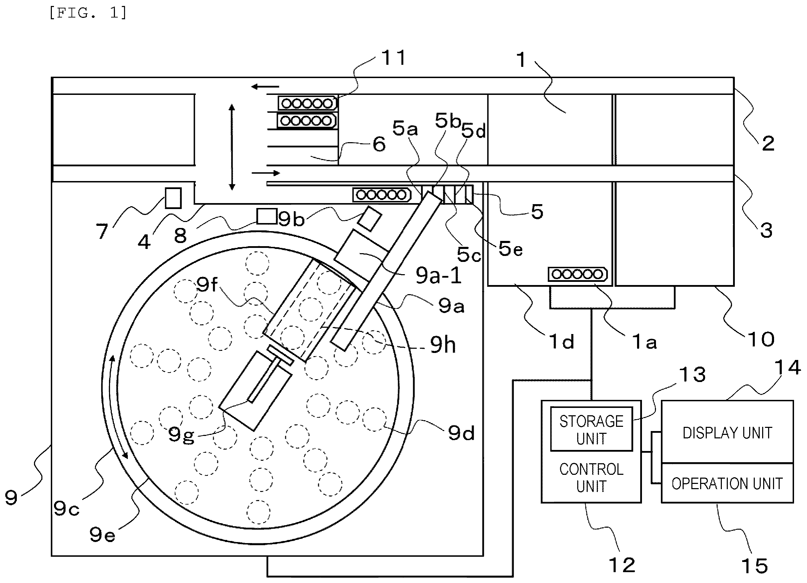

[FIG. 1] FIG. 1 is a block diagram showing an example of a basic configuration of an automatic analysis system.
[FIG. 2] FIG. 2 is a diagram showing assignment of sample container storage positions on a sample container storage disk.
[FIG. 3] FIG. 3 is a diagram showing a configuration of a sample container storage case.
[FIG. 4] FIG. 4 is a flowchart showing a process of discriminating a loading sample and a sample to be restored.
[FIG. 5] FIG. 5 is a flowchart showing a process of storing a loading sample container.
[FIG. 6] FIG. 6 is a flowchart showing a process of storing a sample container to be restored.
[FIG. 7] FIG. 7 is a diagram showing a display unit of a container storage apparatus.
[FIG. 8] FIG. 8 is a diagram showing the display unit after a container storage and discharging operation of the container storage apparatus.
[FIG. 9] FIG. 9 is a functional block diagram of a control unit.

### Description of Embodiments

Hereinafter, an embodiment will be described with reference to the drawings.

### Embodiment

### (1) Description of Basic Configuration

### (1-1) Sample Container Loading And Discharging Unit 1

A sample container loading and discharging unit 1 includes a sample container loading portion 1a for loading a sample rack 11 into an automatic analyzer, and a sample container discharging portion 1d for discharging the sample rack 11 from the automatic analyzer. The sample container loading portion 1a is connected to a feed line 3 of sample container conveyance lines 2 and 3. The sample container discharging portion 1d is connected to the feed line 3 of the sample container conveyance lines 2 and 3. The sample container conveyance line 2 conveys the sample rack 11 from the outside to a sample container storage apparatus 9. The sample container conveyance line 3 conveys the sample rack 11 from the sample container storage apparatus 9 to the outside. Therefore, the sample container conveyance line 2 can be defined as a rack carrying-in line, and the sample container conveyance line 3 can be defined as a rack carrying-out line.

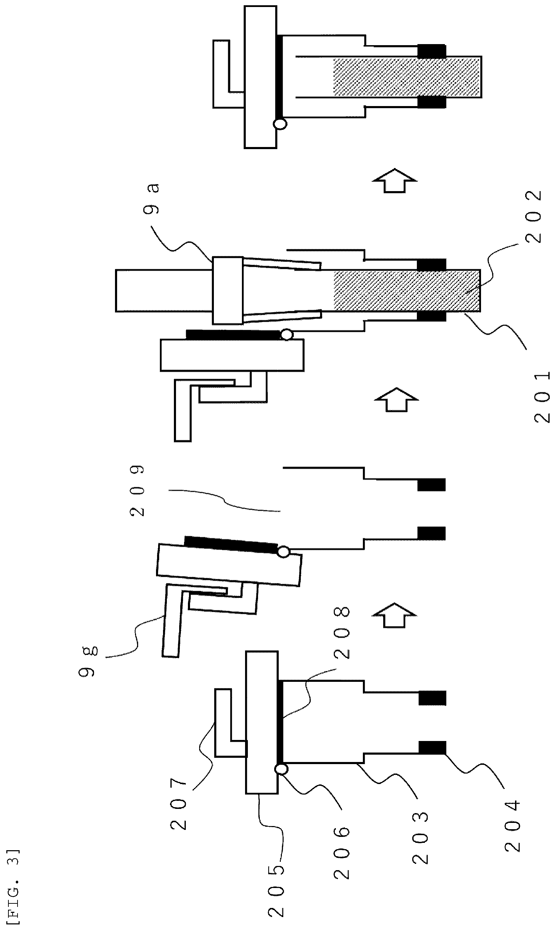

An operator places a sample container 201 (shown in FIG. 3) on the sample rack 11 to be loaded. The sample rack 11 disposed on the sample container loading portion 1a can be replaced with a holder for one sample container.

### (1-2) Sample Container Conveyance Lines 2 and 3

The sample container conveyance lines 2 and 3 connect the sample container loading and discharging unit 1, an analysis unit 10, and the sample container storage unit 9. The sample container conveyance lines 2 and 3 fix the sample rack 11 on a conveyance line, and enable conveyance of the sample rack 11 between the above units.

The sample container conveyance lines 2 and 3 include the return line 2 for conveying the sample rack 11 from the analysis unit 10 to the sample container loading portion 1a, and the feed line 3 for conveying the sample rack 11 from the sample container loading portion 1a to the analysis unit 10. The sample rack 11 conveyed from the analysis unit 10 through the return line 2 is conveyed to the sample container discharging portion 1d or a transfer line 4 of the sample container storage unit 9.

### (1-3) Transfer Line 4

The transfer line 4 is a part of the sample container storage unit 9, is located between a sample container storage 9c (storage) and the return line 2 and feed line 3 which are the sample container conveyance lines, and is connected to the return line 2 and the feed line 3.

The transfer line 4 includes one transfer position 5 at which a sample conveyance mechanism 9a grips the sample container 201 placed on the sample rack 11. The sample rack 11 conveyed from the return line 2 moves on the transfer line 4 and reaches the transfer position 5.

A conveyance mechanism movement portion 9a-1 moves the sample conveyance mechanism 9a between the transfer position 5 and a sample container storage disk 9e.

At the transfer position 5, the sample rack 11 can be stopped at the same number of stop positions 5a, 5b, 5c, 5d, and 5e as the number of positions of the sample rack 11 such that the sample conveyance mechanism 9a can grip the sample container 201 at each position of the sample rack 11.

After the sample rack 11 transfers the sample container 201 to the sample container storage unit 9, the empty sample rack 11 is conveyed to an empty rack storage portion 6 via the transfer line 4. The empty rack storage portion 6 stores a plurality of sample racks 11 on which no sample container 201 is placed.

When the plurality of sample racks 11 are already stored in the empty rack storage portion 6 and there is no storage space, the sample rack 11 is discharged to the sample container discharging portion 1d via the feed line 3.

A sample rack ID reading unit 7 is adjacent to the transfer line 4, and acquires barcode information of the sample rack 11 conveyed to the transfer line 4 and conveyed from the transfer line 4. A sample container sensor 8 is adjacent to the transfer line 4, and detects the presence or absence of the sample container 201 on the sample rack 11 for each position of the sample rack 11.

### (1-4) Sample Container Storage Unit 9

The sample container storage unit 9 is an apparatus for accommodating the sample container 201. The sample container storage unit 9 is located between the transfer position 5 and a sample container storage shutter 9f, and includes the sample conveyance mechanism 9a that grips the sample container 201 disposed at the transfer position 5 and conveys the sample container 201 into the sample container storage 9c. The sample conveyance mechanism 9a places a home position at a position adjacent to the transfer position 5.

The sample container storage unit 9 includes: a sample container ID reading unit 9b that is located between the transfer position 5 and the sample container storage 9c and acquires information of a barcode label attached to the sample container 201; the sample container storage 9c that is adjacent to the transfer position 5, separates an external environment and the inside of the sample container storage 9c by a hollow structure, maintains the inside of the sample container storage 9c at a target temperature, has an opening 9h (second opening) in an upper portion through which the sample container 201 is inserted and taken out, and has a shaft for fixing the sample container storage disk 9e therein; and a mechanism that includes sample container storage positions 9d for storing the sample containers 201, is fixed to the sample container storage disk 9e, which rotates horizontally about the center of the sample container storage 9c, and the storage positions 9d of the sample containers 201, and hermetically stores the sample containers 201.

The sample container storage unit 9 includes a cylindrical sample container storage case 203 (shown in FIG. 3) including an openable and closable lid at the upper portion through which the sample container 201 is inserted and taken out; the sample container storage shutter 9f including an opening and closing mechanism which closes the opening 9h of the sample container storage case 9c during sample storage and opens when the sample container 201 is inserted and taken out; and a lid opening and closing mechanism 9g which opens and closes the lid of the sample container storage case 203 from the outside of the sample container storage case 9c by placing a home position at a position adjacent to the sample container storage shutter 9f.

### (1-5) Analysis Unit 10

The analysis unit 10 is an analysis unit that measures a concentration and physical properties of a specific substance contained in a sample specimen.

The analysis unit 10 is connected to the feed line 3 and the return line 2, and measures a concentration and physical properties of a sample contained in the sample container 201 on the conveyed sample rack 11. The analysis unit 10 may be an analysis unit that performs analysis for obtaining a concentration of a target substance based on an electromotive force when the sample passes through an electrode, or may be an analysis unit that performs analysis for calculating the concentration of the target substance based on an absorbance of the sample at a specific wavelength.

The analysis unit 10 may be an analysis unit that performs analysis for specifically detecting a target substance in the sample using an immune reaction, or may be an analysis unit that performs analysis for calculating a substance amount by mass spectrometry after isolating the target substance by liquid chromatography.

### (1-6) Sample Rack 11

The sample rack 11 is a rack for conveying the sample container 201 between the sample container loading and discharging unit 1, the analysis unit 10, and the sample container storage unit 9 on the return line 2 and the feed line 3 which are sample container conveyance lines. The sample rack 11 includes a mechanism for vertically fixing the sample container 201 and a mechanism movable on the sample container conveyance lines. A plurality of holes (position No. 1, position No. 2, position No. 3, ...) capable of fixing one or a plurality of the sample containers 201 are provided on the sample rack 11. When the sample containers 201 are disposed at the plurality of positions, the sample containers 201 are placed in order from the position 1.

An individual number is assigned to each sample rack 11, and the number is written in a one-dimensional barcode, a two-dimensional barcode, or an RFID tag attached to the sample rack 11.

### (1-7) Control Unit 12

A control unit 12 controls mechanical operations of the sample container storage unit 9 and each unit of the automatic analyzer (the sample container loading and discharging unit 1, the return line 2 and the feed line 3 which are sample container conveyance lines, and the analysis unit 10).

The control unit 12 performs calculation of data acquired by the analysis unit 10, acquisition of an operation log of each unit, calculation of an average number of times of lid opening and closing of the sample container storage case 203 (shown in FIG. 3) for each area in the sample container storage unit 9, and a process of determining the sample container storage position 9d.

The control unit 12 includes a storage unit 13 such as a hard disk, and the storage unit 13 records a calculation result, an operation log of each mechanism, the number of times of lid opening and closing (first value) of the sample container storage case 203 of each sample container storage position 9d, stored sample information (sample type, expiration date, lot), sample container information acquired by the sample container ID reading unit 9b, and the number of the sample rack 11 acquired by the sample rack ID reading unit 7.

A display unit 14 is connected to the control unit 12, and displays data handled by the control unit 12 on a screen. For example, the display unit 14 displays an accumulated number of times of lid opening and closing of each sample container storage position 9d, a status of each position, various system alarms, and sample information during storage.

An operation unit 15 is connected to the control unit 12, and receives an operation instruction of each mechanism from the operator. For example, an instruction to store and discharge a sample container or an instruction to request analysis of a sample being stored is received.

The sample container storage apparatus includes the case 203 capable of holding the container 201 therein, the storage 9c capable of holding a plurality of the cases 203, and the control unit 12 that controls the storage 9c.

The automatic analyzer includes the sample container loading and discharging unit 1, the return line 2 and the feed line 3 which are sample container conveyance lines, and the analysis unit 10.

### (2) Description of Assignment of Sample Container Storage Position on Sample Container Storage Disk 9e

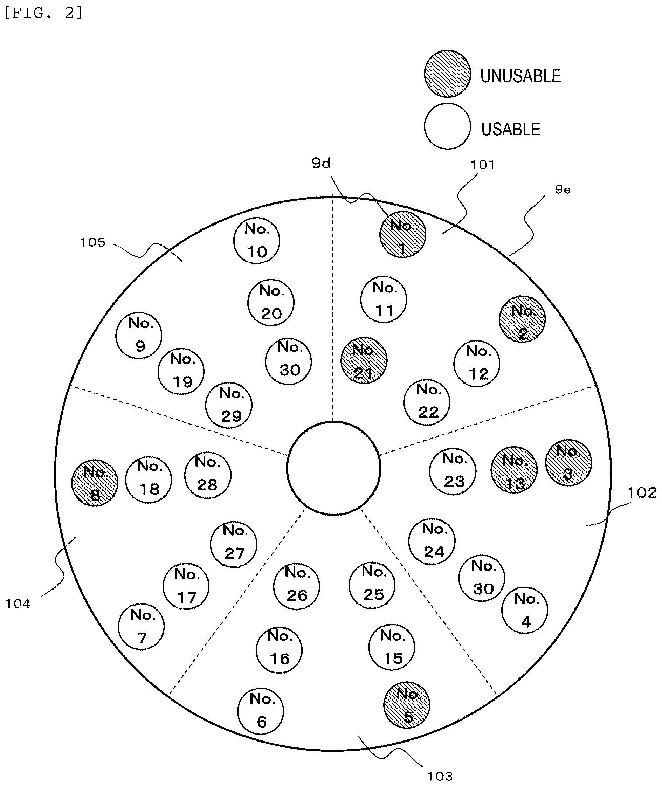

FIG. 2 is a diagram showing the sample container storage disk 9e.

In FIG. 2, a central portion of the sample container storage disk 9e is fixed to the shaft in the sample container storage 9c, and horizontally rotates in any direction (clockwise/counterclockwise) about the shaft. A plurality of the sample container storage positions 9d (No. 1 to No. 30 in the embodiment) are defined in the sample container storage disk 9e.

In the embodiment, the positions of the sample container storage positions 9d are concentrically determined at regular intervals from the center of the circular sample container storage disk 9e.

Each sample container storage position 9d includes a mechanism for vertically fixing the sample container storage case 203.

The sample container storage disk 9e is divided into two or more areas. In the embodiment, areas 101, 102, 103, 104, and 105 divided by a plurality of straight lines extending radially from the center of the circular sample container storage disk 9e are shown. All the sample container storage positions 9d belong to any of the areas 101, 102, 103, 104, and 105.

Integer numbers are assigned to all the sample container storage positions 9d and the areas 101, 102, 103, 104, and 105 in order from 1, and the numbers are treated as position numbers in the sample container storage positions 9d and as block numbers in the areas.

The sample container storage disk 9e may have a shape other than a circular shape, for example, a polygonal shape such as a triangular shape or a quadrangular shape.

Each sample container storage position 9d is divided into two statuses of usable and unusable. The unusable status is assigned to, for example, the sample container storage position 9d at which the sample container 201 is already stored, a sample container position at which the stored sample container 201 is being discharged to the analysis unit 10, and the sample container storage position 9d at which the number of times of lid opening and closing of the sample container storage case 203 reaches a predetermined number of times. The usable status is assigned to the sample container storage position 9d other than the unusable status.

### (3) Description of Sample Container Storage Case 203 and Sample Container 201

FIG. 3 shows a schematic diagram when the sample container 201 is stored in the sample container storage case 203.

In FIG. 3, the sample container 201 has a cylindrical shape, one end of the cylinder is closed, and an opening 209 (first opening) is formed at the opposite end. An outer diameter and a length of the cylinder are respectively designated, and a one-dimensional barcode label, a two-dimensional barcode label, or an RFID tag including sample information that is a type, an expiration date, and a lot of the sample is attached to a side surface. The sample container 201 is filled with a quality control sample analyzed by the analysis unit 10, a calibrator, a general sample, or a sample 202 which is a cleaning liquid for cleaning the analysis unit 10.

The sample container storage case 203 has a cylindrical shape, and an end of the cylinder is open. The sample container storage case 203 includes a tube retaining packing 204 for vertically fixing the sample container 201 therein, an openable and closable case lid 205, a lid fixing portion 206 for fixing the case lid 205, and a lid opening and closing handle 207 for the lid opening and closing mechanism 9g to open and close the case lid 205.

The case lid 205 includes an evaporation prevention packing 208 for maintaining airtightness inside the sample container storage case 203 and preventing evaporation of the sample contained in the sample container 201.

When the sample container 201 is stored, the lid opening and closing mechanism 9g is assembled with the lid opening and closing handle 207 of the case lid 205 to open the case lid 205. The sample container conveyance mechanism 9a fixes the gripped sample container 201 to the tube retaining packing 204, and then returns to the home position. The lid opening and closing mechanism 9g returns to the home position after closing the case lid 205.

In the embodiment, the number of times of insertion and taking-out of the sample container 201 into and from the sample container storage case 203 is counted as the number of times of opening and closing of the case lid 205. The lid opening and closing mechanism 9g performs the opening and closing operation of the case lid 205, returns to the home position without error, and the number of times the opening and closing operation is normally completed is counted by the control unit 12. The number of times is added for each position. As the number of times of opening and closing of the case lid 205, the number of times of opening and closing of the case lid 205 in maintenance may be added in addition to the insertion and taking-out of the sample container 201. In addition, the number of times of lid opening and closing may be counted as the number of times the opening and closing operation is normally completed by detecting the operation of the case lid 205 or the lid fixing portion 206 using a sensor.

A degree of wear of the evaporation prevention packing 208 and a degree of wear and deterioration of the components of the lid fixing portion 206 and the lid opening and closing handle 207 can be estimated based on the number of times of opening and closing of the case lid 205. Therefore, the operator can manage the number of times of opening and closing of the case lid 205 and determine a replacement time of the sample container storage case 203 in advance.

An average value of the number of times of opening and closing of the case lid 205 counted for each position is calculated for each block. An average value (second value) is calculated for each block as a value obtained by dividing a sum of the accumulated number of times of lid opening and closing in all the container storage cases in the block by a total number of sample container storage cases 203 in the block.

The number of times of insertion and taking-out of the sample container 201 into and from the sample container storage case 203 may be acquired by sensing the operation of the sample container conveyance mechanism 9a or may be calculated based on a use history for each sample container position 9d, in addition to the number of times of opening and closing of the case lid 205.

### (4) Flow of Storage and Discharge of Sample Container 201

### (4-1) Storage of Sample Container 201

Operations of the embodiment configured as described above will be described.

The operator first places the sample rack 11, in which the sample container 201 is disposed, on the sample container loading portion 1a of the sample container loading and discharging unit 1, and then issues an instruction to store the sample container 201 in the sample container storage 9c via the operation unit 15. The sample rack 11 disposed on the sample container loading portion 1a is conveyed to the transfer line 4 via the return line 2.

On the transfer line 4, the sample rack ID reading unit 7 acquires a number of the sample rack 11, the sample container sensor 8 acquires the number of the sample containers 201 placed on the sample rack 11, and then the sample rack 11 is conveyed to the transfer position 5.

The control unit 12 selects one sample container storage position 9d of the sample container storage disk 9e determined based on the number of times of opening and closing of the case lid 205. The sample container conveyance mechanism 9a at the home position starts an operation, grips the sample container 201, and moves the sample container 201 to the sample container ID reading unit 9b. The sample container ID reading unit 9b acquires information (sample type, expiration date, lot) of the barcode label attached to the sample container 201, and the control unit 12 stores the acquired sample information.

After the sample container storage disk 9e in the sample container storage 9c is rotated such that the designated position is directly below the storage sample container storage shutter 9f, the sample container storage 9c opens the sample container storage shutter 9f. The lid opening and closing mechanism 9g starts the operation from the home position and opens the case lid 208 of the sample container storage case 203 in the sample container storage 9c.

After the sample container conveyance mechanism 9a inserts the gripped sample container 201 into the sample container storage case 203 and releases the sample container 201, the sample container conveyance mechanism 9a rises and returns to the home position. When the lid opening and closing mechanism 9g closes the lid of the sample container storage case 203 in the sample container storage 9c and returns to the home position, information on the completion of storage of the sample container is sent to the control unit 12, and the number of times of lid opening and closing of the sample container storage case 203 at the sample container storage position 9d is added by "1".

The sample container storage 9c closes the sample container storage shutter 9f, and the control unit 12 updates the status of the sample container storage position 9d. When the storage of all the sample containers 201 on the sample rack 11 is completed, the sample rack 11 on which the sample container 201 is not placed is conveyed to the empty rack storage portion 6.

### (4-2) Discharge of Sample Container 201

The operator issues an instruction to discharge a predetermined sample container 201 from the sample container storage 9c to the analysis unit 10 or the sample container discharging portion 1d of the sample container loading and discharging unit 1 via the operation unit 15. The sample rack 11 on which the sample container 201 is not placed is conveyed from the empty rack storage portion 6 to the transfer line 4. After the sample rack ID reading unit 7 acquires the number of the sample rack 11, the sample rack 11 is conveyed to the transfer position 5.

The sample container storage disk 9e rotates such that the designated sample container storage position 9d is directly below the sample container storage shutter 9f. When the sample container storage shutter 9f is opened in the sample container storage 9c, the lid opening and closing mechanism 9g starts the operation from the home position and opens the lid of the container storage case in the sample container storage 9c.

The sample container conveyance mechanism 9a at the home position starts the operation, grips the sample container 201 in the sample container storage case 203, and moves the sample container 201 to the sample container ID reading unit 9b. When the lid opening and closing mechanism 9g closes the case lid 205 of the sample container storage case 203 and returns to the home position, the number of times of lid opening and closing of the sample container storage case 203 at the sample container storage position 9d is added by "1".

The sample container ID reading unit 9b acquires information (ID, sample type, expiration date, lot) of the label attached to the sample container 201, and associates the acquired sample container information with position information of the sample rack 11. The sample container conveyance mechanism 9a places the gripped sample container 201 on the sample rack 11, releases the sample container 201, and returns to the home position. The sample container storage 9c closes the sample container storage shutter 9f. After the discharge of the sample container 201 for which the discharge instruction is received is completed, or after the positions of the sample rack 11 are all filled, the control unit 12 associates the number of the sample rack 11 with a destination (the analysis unit 10 or the sample container discharging portion 1d).

The sample rack 11 on which the sample container 201 is placed is conveyed to the analysis unit 10 or the sample container discharging portion 1d of the sample container loading and discharging unit 1 via the feed line 3.

### (5) Determination of Container Storage Position

### (5-1) Discrimination Flow of Loading Sample Container

The loading sample container is a sample container 201 that is not associated with any sample container storage position 9d among the sample containers 201 stored in the sample container storage unit 9. The sample container 201 newly instructed to be stored by the operator corresponds to a loading sample container.

A sample container to be restored is a sample container already associated with any of the sample container storage positions 9d. The sample container 201 once stored in the sample container storage unit 9 is conveyed to the analysis unit 10 and stored again, which corresponds to the sample container to be restored.

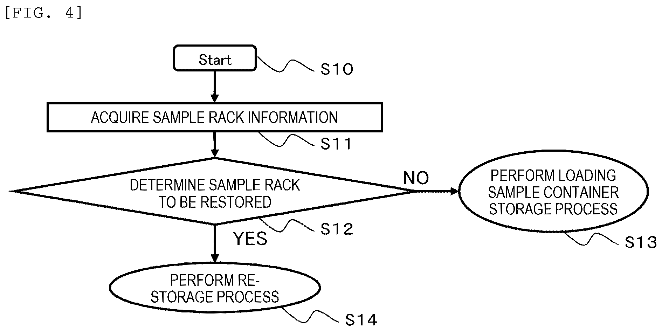

FIG. 4 is a flowchart for discriminating whether the sample container 201 to be stored is a loading sample container.

First, the sample rack 11 on which the sample container 201 is placed is conveyed to the transfer line 4 of the sample container storage unit 9 (step S10). The sample rack ID reading unit 7 acquires the number of the sample rack 11 which is sample rack information (step S11). The control unit 12 collates the number of the sample rack 11 conveyed from the sample container storage unit 9 to the analysis unit 10 with the number of the sample rack 11 acquired by the sample rack ID reading unit 7. The control unit 12 determines whether the sample rack 11 is the sample rack 11 (sample rack to be restored) conveyed from the sample container storage unit 9 to the analysis unit 10 (step S12). When the determination is NO in step S12, a loading sample container storage process is performed (step S13). When the determination is YES in step S12, a restorage process is performed (step S14).

### (5-2) Storage Process Flow of Loading Sample Container

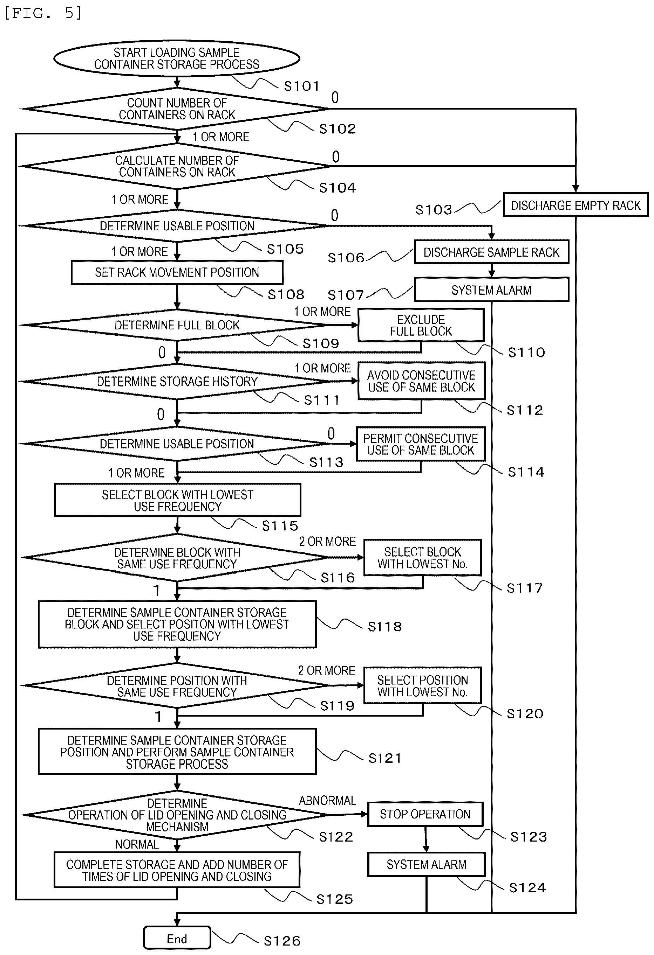

FIG. 5 is a flowchart showing a process of storing the loading sample container 201. When it is determined in the discrimination flow of the loading sample container (FIG. 4) that the sample rack 11 conveyed to the transfer line 4 is a rack on which the loading sample container is placed (step S14), the flow shown in FIG. 5 is performed (step S101).

First, the sample container sensor 8 adjacent to the transfer line 4 measures the number of sample containers 201 placed on the sample rack 11 (step S102), and when the measured number of the sample containers 201 on the sample rack 11 is zero, the sample rack 11 on which no sample is placed is conveyed to the empty rack storage portion 6 or a sample rack discharging portion (step S103). In step S102, when the number of sample containers 201 on the sample rack 11 is one or more, the storage unit 13 stores a value of the measured number of containers as [the number of sample containers on the rack]. The control unit 12 subtracts [the number of sample containers stored in the rack] from [the number of sample containers on the rack] to calculate the number of sample containers 201 placed on the sample rack 11 (step S104). [The number of sample containers stored in the rack] is zero in the case of the sample rack 11 immediately after being conveyed by the transfer line 4.

When the calculated number of sample containers 201 on the sample rack 11 is zero in step S104, the sample rack 11 on which no sample is placed is conveyed to the empty rack storage portion 6 or the sample rack discharging portion (step S103). When the calculated number of sample containers 201 on the sample rack 11 is one or more in step S104, it is determined whether one or more usable positions remain among all the sample container storage positions 9d (step S105). When the number of usable positions is zero, the sample rack 11 on which the sample container 201 is placed is discharged from the sample container discharging portion 1d (step S106), a system alarm is displayed on the display unit 14, and the operator is notified that the sample container 201 that cannot be stored is discharged and that the usable sample container storage position 9d does not remain (step S107).

In step S105, when the number of empty positions is one or more, the sample rack 11 is conveyed to the stop position 5a (pos.1) of the transfer position 5.

The sample rack 11 at the stop position 5a moves to the stop position 5b (pos.2), the sample rack 11 at the stop position 5b moves to the stop position 5c (pos.3), the sample rack 11 at the stop position 5c (pos.3) moves to the stop position 5d (pos.4), and the sample rack 11 at the stop position 5d moves to the stop position 5e (pos.5) (step S108).

Thereafter, it is determined for all blocks whether one or more usable positions remain for each block (101 to 105) (step S109), and a block in which the usable position is zero is excluded from container storage candidate blocks (step S110).

For a block in which one or more usable positions remain, it is determined whether there is a position stored or discharged within a certain time (step S111), and when one or more usable positions remain, a block in which an update history of the number of times of lid opening and closing includes the latest position is excluded from the container storage candidate blocks, and continuous use of the block is avoided (step S112). Based on the storage history of the data stored in the storage unit 13, the control unit 12 performs control such that the sample container 201 is not stored in the same block (area) twice consecutively.

In step 111, when the determination is zero (the position stored or discharged within a certain time is zero), or after step S112 is performed, it is determined whether the usable position remains (step S113).

When the usable position is zero in step S113, a block in which the update history of the number of times of lid opening and closing includes the latest position is set as a container storable block (step S114). When there are one or more usable positions in step S113, a block in which an average of the accumulated number of times of lid opening and closing of the sample container storage case 203 is the smallest is selected from the container storable blocks (step S115).

Then, it is determined whether there are a plurality of selected blocks (step S116), and when there are two or more blocks, a block having the smallest block number is selected from the blocks (step S117). When there is one block selected in step S115, or after step S117 is performed, a block for storing the sample container 201 is determined.

Among the blocks determined as container storage blocks, a position at which the accumulated number of times of opening and closing of the lid of the sample container storage case 203 is the smallest is selected (step S118). Then, it is determined whether there are a plurality of selected positions (step S119), and when there are two or more positions, a position having the smallest position number is selected (step S120). When there is one position at which the accumulated number of times of opening and closing of the lid of the sample container storage case 203 is the smallest, or after step S120 is performed, the selected position is determined as the sample container storage position 9d.

The sample container 201 is stored in the sample container storage case 203 at the determined position (step S121). That is, the case 203 into which the sample container 201 is to be inserted next is determined. At this time, the sample container ID reading unit 9b acquires information of the sample container 201, and the storage unit 13 stores the information. After the operation of the lid opening and closing mechanism 9g, the presence or absence of an error of a lid opening and closing mechanism position sensor (not shown) that determines an error of the lid opening and closing mechanism is determined (step S122). When there is an error, the operation of the sample container storage unit 9 is stopped (step S123), a system alarm is displayed on the display unit 14, and the operator is notified that the mechanism of the sample container storage unit 9 has not operated normally (step S124). When there is no error, the sample information is associated with the sample container storage position 9d, and [the number of sample containers stored in the rack] and the accumulated number of times of opening and closing of the case lid 205 at the position are added by 1 (step S125).

Thereafter, the number of sample containers 201 on the sample rack 11 is calculated again (step S104), and when the determination result is one or more, the flow is continued. When the determination result is zero in step S104, the sample rack 11 on which the sample container 201 is not placed is conveyed to the empty rack storage portion 6 or the sample rack discharging portion (step S103), and a storage process flow of the loading sample container is ended (step S126).

### (5-3) Restorage Process Flow

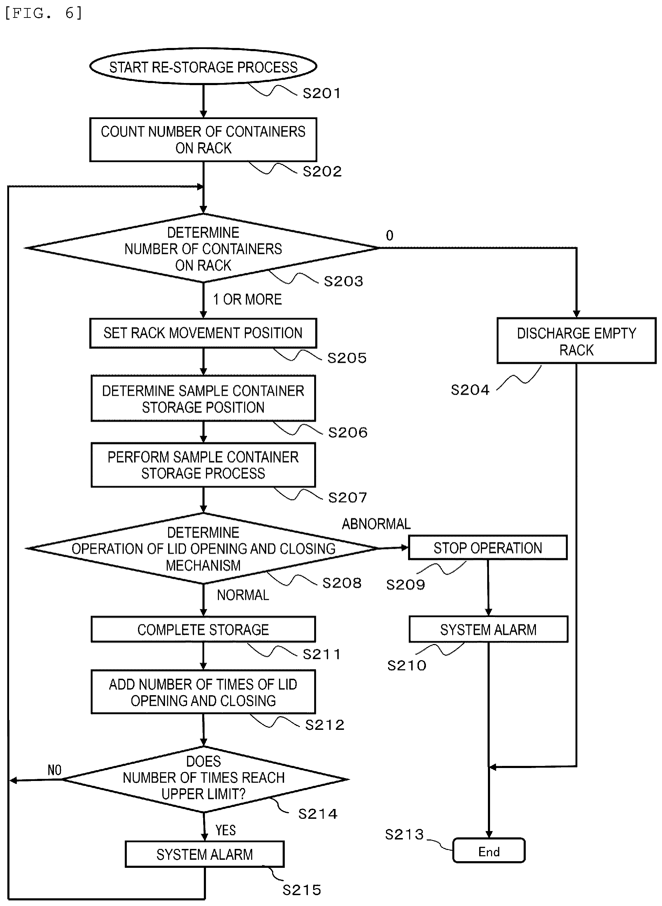

FIG. 6 is a flowchart showing a process of storing a sample container to be restored. When it is determined in the discrimination flow of the loading sample that the sample rack 11 conveyed to the transfer line 4 is a rack on which the sample container to be restored is placed, the present flow is performed (step S201).

First, the sample container sensor 8 measures the number of sample containers 201 placed on the sample rack 11, and the storage unit 13 stores the measured number as [the number of sample containers on the rack] (step S202). The control unit 12 subtracts [the number of sample containers stored in the rack] from [the number of sample containers on the rack] to calculate the number of sample containers 201 placed on the sample rack 11 (step S203). When the calculated number of sample containers 201 on the sample rack 11 is zero, the sample rack 11 on which no sample is placed is conveyed to the empty rack storage portion 6 or the sample rack discharging portion (step S204), and when the calculated number of sample containers 201 on the sample rack 11 is one or more, the sample rack 11 is conveyed to the stop position 5a of the transfer position 5. In addition, the sample rack 11 at the stop position 5a moves to the stop position 5b, the sample rack 11 at the stop position 5b moves to the stop position 5c, the sample rack 11 at the stop position 5c moves to the stop position 5d, and the sample rack 11 at the stop position 5d moves to the stop position 5e (step S205).

The control unit 12 determines an original sample container storage position 9d as the sample container storage position 9d based on the sample container information associated with the sample rack number (step S206). The sample container 201 is stored in the sample container storage case 203 at the determined position (step S207). At this time, the sample container ID reading unit 9b acquires information of the sample container 201, and the storage unit 13 stores the information. After the operation of the lid opening and closing mechanism 9g, it is determined whether there is an error in a mechanism position sensor value (step S208). When there is an error, the operation of the sample container storage unit 9 is stopped (step S209), and a system alarm is displayed on the display unit 14 (step S210). When there is no error, the sample information is associated with the sample container storage position 9d, one is added to [the number of sample containers stored in the rack] (step S211), and one is added to the accumulated number of times of opening and closing of the lid of the sample container storage case 203 at the position (step S212). It is determined whether the accumulated number of times of opening and closing of the lid of the sample container storage case 203 is an upper limit (step S214), and in the case of the upper limit, a system alarm is displayed on the display unit 14 (step S215), and the process returns to step S203. When the number of times is not the upper limit in step 214, the process returns to step S203 without going through step S215.

Thereafter, the number of sample containers on the sample rack 11 is calculated again (step S203), and when the determination result is one or more, the flow is continued. When the determination result is zero, the sample rack 11 on which the sample container 201 is not placed is conveyed to the empty rack storage portion 6 or the sample rack discharging portion (step S204), and the restorage process flow ends (step S213).

### (6) Transition of Display Unit 14 by Storage and Discharge of Sample Container 201

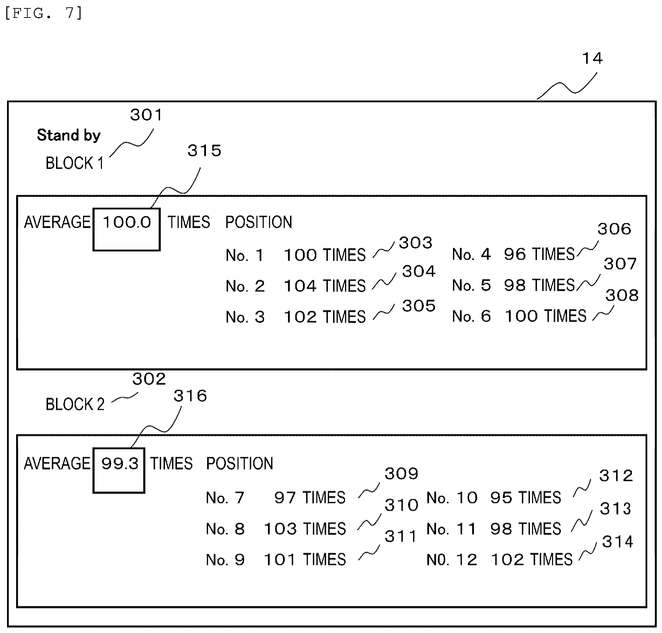

FIG. 7 is a diagram showing the display unit 14 displaying the number of times of lid opening and closing. The display unit 14 displays block information 301 and 302 for each block number. The accumulated number of times of opening and closing 303, 304, 305, 306, 307, 308, 309, 310, 311, 312, 313, 314 of the case lid 205 of each sample container storage position 9d is shown for each block.

Average values 315 and 316 of the accumulated number of times of lid opening and closing are displayed for each block. For example, the information 301 of a block 1 indicates the average value 315 calculated by dividing a total value of the number of times of lid opening and closing 303 at the position No. 1, the number of times of lid opening and closing 304 at the position No. 2, the number of times of lid opening and closing 305 at the position No. 3, the number of times of lid opening and closing 306 at the position No. 4, the number of times of lid opening and closing 307 at the position No. 5, and the number of times of lid opening and closing 308 at the position No. 6 by the number of positions of the block 1.

Similarly to the information 301 of the block 1, the information 302 of a block 2 also indicates the average value 316 calculated by dividing a total value of the number of times of lid opening and closing 309 at the position No. 7, the number of times of lid opening and closing 310 at the position No. 8, the number of times of lid opening and closing 311 at the position No. 9, the number of times of lid opening and closing 312 at the position No. 10, the number of times of lid opening and closing 313 at the position No. 11, and the number of times of lid opening and closing 314 at the position No. 12 by the number of positions of the block 1.

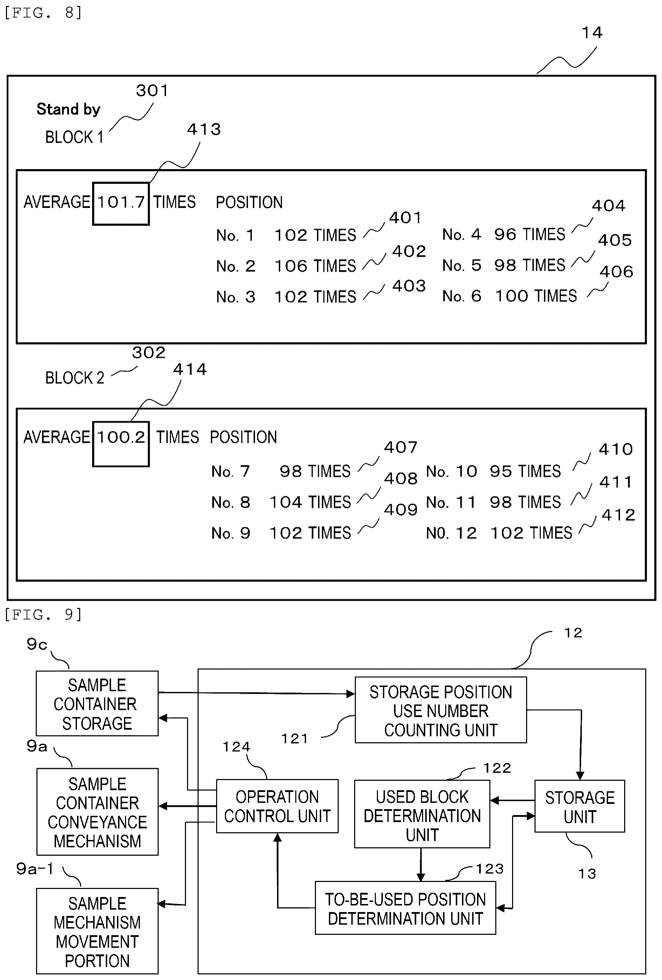

FIG. 8 is a diagram showing the display unit 14 displaying the accumulated number of times of opening and closing of the case lid 205 of each sample container storage position 9d after the discharge and storage operation of the sample container 201 is performed from the state shown in FIG. 7. Among the sample containers 201 stored in the block 1, the sample containers 201 at the position No. 1 and the position No. 2 are discharged to the analysis unit 10 and stored in the sample container storage unit 9 again. In this case, at the position No. 1, "1" is added to the number of times of lid opening and closing at the time of discharging the sample container, and "1" is added at the time of restorage. Therefore, the number of times of lid opening and closing 401 at the position No. 1 is a value obtained by adding "2" to the number of times of opening and closing 303 before the operation. Similarly to the position No. 1, the number of times of lid opening and closing 402 at the position No. 2 is a value obtained by adding "2" to the number of times of opening and closing 304 before the operation.

New sample containers 201 are stored at the position No. 7, the position No. 8, and the position No. 9 of the block 2. In this case, at the position No. 7, the number of times of lid opening and closing is added by "1" at the time of storing the sample container and discharging the sample container.

Therefore, the number of times of lid opening and closing 407 at the position No. 7 is a value obtained by adding "1" to 97 of the number of times of opening and closing 309 before the operation.

Similarly to the position No. 7, the number of times of lid opening and closing 408 and 409 at the position No. 8 and the position No. 9 are also values obtained by adding "1" to the number of times of opening and closing 310 and 311 before the operation.

Since the case lid 205 at the position No. 3, the position No. 4, the position No. 5, the position No. 6, the position No. 10, the position No. 11, and the position No. 12 is not opened and closed, the number of times of lid opening and closing 403, 404, 405, 406, 410, 411, and 412 after the operation are the same values as the number of times of lid opening and closing 305, 306, 307, 308, 312, 313, and 315 before the operation.

Even after the opening and closing operation of the case lid 205, average values 413 and 414 of the accumulated number of times of lid opening and closing are displayed for each block. For example, the information 301 of the block 1 indicates the average value 413 calculated by dividing a total value of the number of times of lid opening and closing 401 at the position No. 1, the number of times of lid opening and closing 402 at the position No. 2, the number of times of lid opening and closing 403 at the position No. 3, the number of times of lid opening and closing 404 at the position No. 4, the number of times of lid opening and closing 405 at the position No. 5, and the number of times of lid opening and closing 406 at the position No. 6 by the number of positions of the block 1.

Similarly to the information 301 of the block 1, the information 302 of the block 2 also indicates the average value 414 calculated by dividing a total value of the number of times of lid opening and closing 407 at the position No. 7, the number of times of lid opening and closing 408 at the position No. 8, the number of times of lid opening and closing 409 at the position No. 9, the number of times of lid opening and closing 410 at the position No. 10, the number of times of lid opening and closing 411 at the position No. 11, and the number of times of lid opening and closing 412 at the position No. 12 by the number of positions of the block 1.

FIG. 9 is a functional block diagram of the control unit 12, and is a functional block diagram related to counting of the number of times of use of the sample container storage position 9d in the sample container storage disk 9e, determination of a used block in the blocks 101 to 105, and determination of a to-be-used position. Other operation controls are omitted.

InFIG. 9 , a storage position use number counting unit 121 (number counting unit) counts the number of times of use of each sample container storage position 9d based on the operation of the lid opening and closing mechanism 9g in the sample container storage 9c, and stores the count in the storage unit 13 as data. Based on the data stored in the storage unit 13, a used block determination unit 122 determines a block having the smallest average of the accumulated number of times of lid opening and closing among the blocks 101 to 105.

Based on the data stored in the storage unit 13, a to-be-used position determination unit 123 (determination unit) determines a position to use the position having the lowest use frequency among the sample container storage positions 9d of the block determined to be used by the used block determination unit 122. That is, the case 203 into which the sample container 201 is to be inserted next is determined.

The operation control unit 124 controls the operations of the sample container storage 9c, the sample container conveyance mechanism 9a, and the sample mechanism movement portion 9a-1 such that the to-be-used position determined by the to-be-used position determination unit 123 is used.

As described above, according to the embodiment of the invention, it is possible to provide a container storage apparatus, a container storage method, and an automatic analysis system that equalize a use frequency of a plurality of container storage positions, slow progression of wear of components, and reduce a maintenance frequency.

The above-described example is an example in which the invention is applied to sample containers. The invention is applicable not only to sample containers but also to reagent containers and quality control sample containers.

### Reference Signs List

1: sample container loading and discharging unit
1a: sample container loading portion
1d: sample container discharging portion
2: return line
3: feed line
4: transfer line
5: transfer position
6: empty rack storage portion
7: sample rack ID reading unit
8: sample container sensor
9: sample container storage unit
9a: sample container conveyance mechanism
9a-1: conveyance mechanism movement portion
9b: sample container ID reading unit
9c: sample container storage
9d: sample container storage position
9e: sample container storage disk
9f: sample container storage shutter
9g: lid opening and closing mechanism
9h: opening (second opening)
10: analysis unit
11: sample rack
12: control unit
13: storage unit
14: display unit
15: operation unit
101: block 1
102: block 2
103: block 3
104: block 4
105: block 5
121: storage position use number counting unit (number counting unit)
122: used block determination unit
123: to-be-used position determination unit (determination unit)
124: operation control unit
201: sample container
202: sample
203: sample container storage case
204: tube retaining packing
205: case lid
206: lid fixing portion
207: lid opening and closing handle
208: evaporation prevention packing
209: opening (first opening)
301: block information on block number 1
302: block information on block number 2
303: average number of times of lid opening and closing in block 1
304: average number of times of lid opening and closing in block 2
305: number of times of lid opening and closing at position 1
306: number of times of lid opening and closing at position 2
307: number of times of lid opening and closing at position 3
308: number of times of lid opening and closing at position 4
309: number of times of lid opening and closing at position 5
310: number of times of lid opening and closing at position 6
311: number of times of lid opening and closing at position 7
312: number of times of lid opening and closing at position 8
313: number of times of lid opening and closing at position 9
314: number of times of lid opening and closing at position 10
315: number of times of lid opening and closing at position 11
316: number of times of lid opening and closing at position 12
401: average number of times of lid opening and closing in block 1 after lid opening and closing operation
402: average number of times of lid opening and closing in block 2 after lid opening and closing operation
403: number of times of lid opening and closing at position 1 after lid opening and closing operation
404: number of times of lid opening and closing at position 2 after lid opening and closing operation
405: number of times of lid opening and closing at position 3 after lid opening and closing operation
406: number of times of lid opening and closing at position 4 after lid opening and closing operation
407: number of times of lid opening and closing at position 5 after lid opening and closing operation
408: number of times of lid opening and closing at position 6 after lid opening and closing operation
409: number of times of lid opening and closing at position 7 after lid opening and closing operation
410: number of times of lid opening and closing at position 8 after lid opening and closing operation
411: number of times of lid opening and closing at position 9 after lid opening and closing operation
412: number of times of lid opening and closing at position 10 after lid opening and closing operation
413: number of times of lid opening and closing at position 11 after lid opening and closing operation
414: number of times of lid opening and closing at position 12 after lid opening and closing operation

## Claims

1. A container storage apparatus comprising:
cases each configured to hold and store a container therein;
a storage configured to hold the plurality of cases; and
a control unit configured to control the storage, wherein
the control unit includes
a number counting unit configured to acquire, for each of the plurality of cases, a first value calculated based on the number of times the container is inserted into the case or the number of times the container is taken out from the case, and
a determination unit configured to determine, based on the first value, the case into which the container conveyed from the outside is to be inserted next.

2. The container storage apparatus according to claim 1, wherein
the storage includes a plurality of areas,
each of the plurality of areas is configured to store the plurality of cases,
the number counting unit acquires, for each of the plurality of areas, a second value calculated based on the number of times the container is inserted or the number of times the container is taken out, and
the determination unit determines, based on the second value, the area into which the container conveyed from the outside is to be inserted next.

3. The container storage apparatus according to claim 2, wherein
the control unit includes a storage unit that stores the first value for each of the plurality of cases, and based on a history of the storage unit, the determination unit performs control such that the container is not stored in the same area twice consecutively.

4. The container storage apparatus according to claim 3, wherein
the case has a first opening through which the container is inserted and taken out, and includes a lid that opens and closes the first opening and a packing that seals inside of the case 203 by the lid.

5. The container storage apparatus according to claim 4, wherein
the first value is a value obtained by counting the number of times of opening and closing the lid of the case, and
the second value is a value obtained, for a predetermined one of the areas, by dividing a sum of the first values for all the cases in the area by a total number of the cases in the area.

6. The container storage apparatus according to claim 5, wherein
the storage includes, therein, a disk that rotates horizontally,
the disk is configured to fix the case, and
the storage has a second opening connectable to the outside, and includes a storage shutter that opens and closes the second opening.

7. The container storage apparatus according to claim 6, further comprising:
a container conveyance mechanism configured to insert the container into the case and take out the container from the case; and
a lid opening and closing mechanism configured to open and close the lid of the case.

8. The container storage apparatus according to claim 7, wherein
the first value is a value obtained by counting the number of times an opening and closing operation on the lid of the case normally ends after the lid opening and closing mechanism performs the opening and closing operation.

9. The container storage apparatus according to claim 8, further comprising:
a transfer line configured to convey a rack on which the container is placed;
a storage portion configured to store the rack;
a rack carrying-in line configured to carry the rack from the outside; and
a rack carrying-out line configured to carry the rack to the outside.

10. The container storage apparatus according to claim 9, wherein
the storage unit stores information on the container being held in the case,
the storage unit stores the information even after the container is discharged to the outside of the case, and
when the container discharged to the outside of the case is to be stored in the storage again, the determination unit determines to store the container in the same case based on the information.

11. A container storage method comprising:
acquiring, for each of a plurality of cases held in a storage and each configured to hold and store a container therein, a first value based on the number of times the container is inserted into the case or the number of times the container is taken out from the case; and
determining, based on the first value, the case into which the container conveyed from the outside is to be inserted next.

12. The container storage method according to claim 11, wherein
the storage includes a plurality of areas,
each of the plurality of areas is configured to store the plurality of cases,
a second value calculated based on the number of times the container is inserted or the number of times the container is taken out is acquired for each of the plurality of areas, and
the area into which the container conveyed from the outside is to be inserted next is determined based on the second value.

13. The container storage method according to claim 12, wherein
the first value is stored in a storage unit for each of the plurality of cases, and
based on a storage history of the storage unit, control is performed such that the container is not stored in the same area twice consecutively.

14. The container storage method according to claim 13, wherein
the case has a first opening through which the container is inserted and taken out, and includes a lid that opens and closes the first opening,
the first value is an accumulated value obtained by counting the number of times of opening and closing the lid of the case, and
the second value is a value obtained, for a predetermined one of the areas, by dividing a sum of the first values for all the cases in the area by a total number of the cases in the area.

15. The container storage method according to claim 14, wherein
the storage unit stores information on the container being held in the case,
the storage unit stores the information even after the container is discharged to the outside of the case, and
when the container discharged to the outside of the case is to be stored in the storage again, it is determined based on the information that the container is to be stored in the same case.

16. An automatic analysis system comprising:
the container storage apparatus according to claim 1; and
an automatic analyzer, wherein
the automatic analyzer includes
a sample container loading and discharging unit,
a sample container conveyance line, and
an analysis unit.

17. The automatic analysis system according to claim 16, further comprising:
a transfer line configured to convey a rack on which the container is placed;
a storage portion configured to store the rack;
a rack carrying-in line configured to carry the rack from the outside; and
a rack carrying-out line configured to carry the rack to the outside.
